# EUROPÄISCHE PATENTSCHRIFT

(11) **EP 3 898 802 B1**
(45) Veröffentlichungstag und Bekanntmachung des Hinweises auf die Patenterteilung: **27.09.2023**
(21) Anmeldenummer: 19820790.4
(22) Anmeldetag: 18.12.2019
(51) Int. Cl.: C08K 3/013, C08K 3/04, C08K 3/26, C08K 3/34, C08G 18/48, C08G 18/66, C08G 18/76, C08G 18/79, C08G 18/22, C08G 18/32, C08G 18/38

(54) **VERFAHREN ZUM VERFÜLLEN VON HOHLRÄUMEN, FUGEN UND SPALTEN IN EINEM SUBSTRAT MIT EINER ZWEIKOMPONENTIGEN POLYURETHANVERGUSSMASSE MIT EINSTELLBARER TOPFZEIT**
METHOD FOR FILLING CAVITIES, JOINTS AND GAPS IN A SUBSTRATE WITH A TWO-COMPONENT POLYURETHANE CASTING COMPOSITION HAVING AN ADJUSTABLE POT LIFE
PROCÉDÉ DE REMPLISSAGE DE CAVITÉS, DE JOINTS ET DE FISSURES DANS UN SUBSTRAT AVEC UNE MATIÈRE DE REMPLISSAGE DE POLYURÉTHANE BICOMPOSANTE À DURÉE DE VIE EN POT RÉGLABLE

(30) Priorität: 21.12.2018 EP 18215604
(43) Veröffentlichungstag der Anmeldung: 27.10.2021
(73) Patentinhaber: Sika Technology AG, 6340 Baar (CH)
(72) Erfinder: CORSARO, Antonio, 8105 Regensdorf (CH); CHOFFAT, Fabien, 4522 Rüttenen (CH)
(74) Vertreter: Sika Patent Attorneys
(86) Internationale Anmeldenummer: PCT/EP2019/085952
(87) Internationale Veröffentlichungsnummer: WO 2020/127485

(56) Entgegenhaltungen:
- EP-A1- 0 800 544
- EP-A1- 2 436 713

## Beschreibung

### Technisches Gebiet

Die Erfindung betrifft ein Verfahren zum Verfüllen von Hohlräumen, Fugen oder Spalten mit einer niedrigviskosen zweikomponentigen Polyurethanzusammensetzungen.

### Stand der Technik

Zweikomponentige Polyurethanzusammensetzungen auf Basis von Polyolen und Polyisocyanaten werden bereits seit langem eingesetzt. Zweikomponentige Polyurethanzusammensetzungen haben gegenüber einkomponentigen den Vorteil, dass sie nach dem Mischen schnell aushärten und deshalb bereits nach kurzer Zeit höhere Kräfte aufnehmen und übertragen können. Weiterhin sind sie nicht von externen Aushärtungsfaktoren wie Luftfeuchtigkeit und Wärmezufuhr abhängig und können damit auch in grossen Schichten oder Volumina homogen und rasch bei Raumtemperatur aushärten. So werden zweikomponentige Polyurethanzusammensetzungen auch seit längerem erfolgreich als Vergussmassen eingesetzt. Vergussmassen finden in Industrie und zu Reparaturzwecken vielseitige Anwendung, beispielsweise als isolierende Elektrovergussmassen bei der Herstellung elektrischer und elektronischer Bauteile oder für unterirdische elektrische Leitungen, oder als Bau- und Reparaturvergussmassen, beispielsweise bei der Reparatur von Gleisen. Insbesondere bei Reparaturvergussmassen im Strassen- und Schienenverkehr sind jedoch spezielle Anforderungen zu erfüllen. Zum einen müssen die Vergussmassen mechanisch anspruchsvolle Leistungen erbringen und dabei genügend Schall- und Vibrationsdämpfung erreichen. Für diesen Zweck gibt es bereits einige solche Vergussmassen auf dem Markt, meist basierend auf Polyurethan-, Polyharnstoff-, Silikon- oder Epoxidzusammensetzungen. Diese sind in der Lage, die erforderlichen mechanischen Anforderungen zu erfüllen um als langlebige, zähelastische Füllmassen mit hohen Moduln und niedrigen Glasübergangstemperaturen eingesetzt werden zu können. Auf der anderen Seite sind mit zweikomponentigen Vergussmassen aber auch immer Kompromisse einzugehen. Für die Anwendung zweikomponentiger Polyurethanzusammensetzungen als Vergussmassen wäre es zwar generell wünschenswert, eine genügend lange Verarbeitungszeit (Topfzeit) der gemischten Zusammensetzung, ohne zu schnellem Viskositätsanstieg durch die beginnende Aushärtung, mit einer anschliessend nach Verarbeitung aber sehr raschen Aushärtung und ausserordentlich schnellem Festigkeitsaufbau kombinieren zu können. Dies lässt sich mit üblichen Zweikomponenten-zusammensetzungen aber kaum erreichen. Entweder ist die Topzeit sehr kurz bei Zusammensetzungen, die rasch aushärten und schnell Festigkeit aufbauen, oder aber die Aushärtung und der Festigkeitsaufbau sind langsam, wenn Zusammensetzungen mit langer Topfzeit verarbeitet werden. Dies ist gerade bei Reparaturvergussmassen im Verkehrsbereich, etwa bei Tramgleisen, ein Problem. Dort werden oft grössere Hohlräume und/oder weitläufige Bereiche ausgegossen und die Topfzeit muss lang genug dafür sein. Gleichzeitig sollten die Reparaturarbeiten, welche meist in der Nacht stattfinden, so rasch wie möglich abgeschlossen sein und der reparierte Bereich, wie beispielsweise das untergossene Tramgleis, so rasch wie möglich wieder für den Verkehr freigegeben werden können. Dies ist aber nur möglich, wenn die applizierte Vergussmasse bereits so weit ausgehärtet ist, dass sie intensiv belastet werden kann. Heute gängige zweikomponentige Polyurethanzusammensetzungen für dieses Einsatzgebiet sind meist aufwändig formuliert, etwa durch Einsatz spezieller, verlangsamter Polyaminvernetzer, um diese Anforderungen möglichst gut zu erfüllen. Allerdings gelingt dies nur in befriedigendem Masse. Die Topfzeit solcher Zusammensetzungen ist zwar relativ gut kontrollierbar, aber der Viskositätsanstieg während der Topfzeit ist nicht unerheblich und die Wartezeit, bis die vergossene Zusammensetzung eine genügend hohe Festigkeit erreicht hat, beträgt mindestens einige Stunden bis ein Tag. Zudem sind die erwähnten Polyaminvernetzer oft gesundheitlich bedenklich und wassergefährdend. EP 0 800 544 A1 betrifft ein zweikomponentiges Reaktionssystem zur Herstellung von Polyurethanen, beinhaltend einen speziellen Katalysator, welche zur Herstellung von Dichtstoffen verwendet werden kann.EP 2 436 713 A1 betrifft zweikomponentige Polyurethanzusammensetzungen, welche einerseits eine erhöhte Topfzeit, andererseits eine beschleunigte Aushärtezeit aufweisen.

Es besteht daher der Wunsch nach Vergussmassen auf Basis von zweikomponentigen Polyurethanzusammensetzungen, die keine gesundheitlich bedenklichen Aminvernetzer enthalten und die über ausgezeichnete mechanische Eigenschaften verfügen und die nach Applikation sehr rasch aushärten und innert äusserst kurzer Zeit, z.B. höchstens wenigen Stunden, so hohe Festigkeiten und Moduln aufweisen, dass sie, beispielsweise im Fall von Reparaturvergussmassen im Strassen- und Schienenverkehr, wieder für die Benutzung der Strassen und Schienen freigegeben werden können. Zusätzlich sollen sie aber eine genügend lange Topfzeit ohne merklichen Viskositätsanstieg aufweisen, dass eine Verarbeitung auch grösserer Bau- oder Fertigungsteile möglich ist. Weiterhin wünschenswert wäre es, die Topfzeit solcher Zusammensetzungen für die gewünschte Anwendung einstellen zu können.

### Darstellung der Erfindung

Aufgabe der vorliegenden Erfindung ist es daher, eine Vergussmasse auf Basis einer zweikomponentigen Polyurethanzusammensetzung zur Verfügung zu stellen, welche sehr schnell zu einer mechanisch ausgezeichneten und als Reparaturmasse oder Elektroisolation geeigneten Masse aushärtet, aber dabei gleichzeitig eine genügend lange, innerhalb gewisser Grenzen einstellbare Topfzeit aufweist, dass sie problemlos verarbeitet werden kann.

Überraschenderweise wird diese Aufgabe mit dem erfindungsgemässen Verfahren auf Basis einer zweikomponentigen Polyurethanzusammensetzung gemäss Anspruch 1 gelöst. Sie umfasst ein Polyol, ein kurzkettiges Diol sowie eine Verbindung mit mindestens einer Thiolgruppe in der ersten Komponente und einem hohen Gehalt an Polyisocyanat in der zweiten Komponente. Weiterhin enthält die Zusammensetzung einen Metallkatalysator für die Aushärtung der Zusammensetzung, welcher Thiokomplexe bilden kann, wobei das Verhältnis von Thiolgruppen zu Metallatomen in der Zusammensetzung festgelegt ist. Die Zusammensetzung verfügt im ausgehärteten Zustand über eine sehr hohe Festigkeit und gute Elastizität. Nach Mischen der Komponenten härtet sie nach einer genügend langen, innerhalb gewisser Grenzen einstellbaren Topfzeit sehr schnell aus und erreicht bereits nach kurzer Zeit, z.B. wenigen Stunden bis einem Tag, sehr gute mechanische Werte.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft ein Verfahren zum Verfüllen von Hohlräumen, Fugen und Spalten in einem Substrat, umfassend die Schritte a) Mischen der ersten Komponente A und der zweiten Komponente B einer zweikomponentigen Polyurethanzusammensetzung bestehend aus einer ersten Komponente A und einer zweiten Komponente B wobei
- die erste Komponente **A**
   - mindestens ein Polyol **A1** mit einer OH-Funktionalität im Bereich von 1.5 bis 4 und einem mittleren Molekulargewicht im Bereich von 250 bis 15'000 g/mol, und
   - mindestens ein Diol **A2** mit zwei Hydroxylgruppen, die über eine C2- bis C9-Kohlenstoffkette verbunden sind, und
   - mindestens eine Verbindung **T,** die mindestens eine Thiolgruppe aufweist, umfasst; und
- die zweite Komponente **B**
   - mindestens ein Polyisocyanat **I**, umfasst;

wobei in einer der Komponenten zusätzlich mindestens ein Metallkatalysator **K** für die Reaktion von Hydroxylgruppen und Isocyanatgruppen enthalten ist, der Thiokomplexe bilden kann;
und wobei das molare Verhältnis aller Thiolgruppen der mindestens einen Verbindung **T** zu allen Metallatomen des mindestens einen Metallkatalysators **K** zwischen 1:1 und 250:1 liegt;
und wobei das molare Verhältnis aller NCO-Gruppen der Polyisocyanate **I** zu allen OH-Gruppen der Polyole **A1** und **A2** = 0.9 : 1 - 1.2 : 1, insbesondere 1.0 : 1 - 1.1 : 1, beträgt;
und wobei die Polyurethanzusammensetzung direkt nach Mischen der Komponenten **A** und **B** bei 23 °C fliessfähig, bevorzugt selbstnivellierend ist und eine Viskosität, gemessen bei 20°C auf einem Platten-Platten Viskosimeter mit Plattenabstand 1 mm und Plattendurchmesser 25 mm, von < 5000 Pa·s bei einer Scherrate von 0.01 s⁻¹ und < 500 Pa·s bei einer Scherrate von 1 s⁻¹ und < 50 Pa·s bei einer Scherrate von 10 s⁻¹, aufweist; b) Eingiessen der vermischten Polyurethanzusammensetzung in den zu verfüllenden Hohlraum, die zu verfüllende Fuge oder den zu verfüllenden Spalt des Substrates; c) Aushärten der Polyurethanzusammensetzung im Hohlraum, in der Fuge oder im Spalt.

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Unter "Molekulargewicht" versteht man im vorliegenden Dokument die molare Masse (in Gramm pro Mol) eines Moleküls oder eines Molekül-Rests. Als "mittleres Molekulargewicht" wird das Zahlenmittel Mₙ einer polydispersen Mischung von oligomeren oder polymeren Molekülen oder Molekül-Resten bezeichnet, welches üblicherweise mittels Gelpermeationschromatographie (GPC) gegen Polystyrol als Standard bestimmt wird. Als "Raumtemperatur" wird im vorliegenden Dokument eine Temperatur von 23°C bezeichnet. Gewichtsprozente, abgekürzt Gew.-%, bezeichnen Massenanteile eines Bestandteils einer Zusammensetzung, bezogen auf die gesamte Zusammensetzung, falls nichts anderes angeben. Die Begriffe "Masse" und "Gewicht" werden im vorliegenden Dokument synonym benutzt.

Als "primäre Hydroxylgruppe" wird eine OH-Gruppe bezeichnet, welche an ein C-Atom mit zwei Wasserstoffen gebunden ist.

Als "Topfzeit" wird in diesem Dokument die Zeit bezeichnet, innerhalb welcher die Polyurethanzusammensetzung nach dem Mischen der beiden Komponenten verarbeitet werden kann, bevor die Viskosität durch das Voranschreiten der Vernetzungsreaktion zu hoch für eine weitere Verarbeitung geworden ist.

Der Begriff "Festigkeit" bezeichnet im vorliegenden Dokument die Festigkeit der ausgehärteten Zusammensetzung, wobei mit Festigkeit insbesondere die Zugfestigkeit und das Elastizitätsmodul (E-Modul), insbesondere im Dehnungsbereich 0.05 bis 0.25%, gemeint sind.

Als "Raumtemperatur" wird im vorliegenden Dokument eine Temperatur von 23°C bezeichnet.

Als "lagerstabil" oder "lagerfähig" wird eine Substanz oder eine Zusammensetzung bezeichnet, wenn sie bei Raumtemperatur in einem geeigneten Ge-binde während längerer Zeit, typischerweise mindestens 3 Monaten bis zu 6 Monaten und mehr, aufbewahrt werden kann, ohne dass sie sich in ihren An-wendungs- oder Gebrauchseigenschaften, insbesondere der Viskosität und der Vernetzungsgeschwindigkeit, durch die Lagerung in einem für ihren Gebrauch relevanten Ausmass verändert.

Alle im Dokument erwähnten Industriestandards und Normen beziehen sich auf die zum Zeitpunkt der Einreichung der Erstanmeldung gültigen Fassungen.

Die erste Komponente **A** enthält zunächst mindestens ein Polyol **A1** mit einer OH-Funktionalität im Bereich von 1.5 bis 4 und einem mittleren Molekulargewicht im Bereich von 250 bis 15'000 g/mol.

Geeignete Polyole **A1** sind prinzipiell alle gängigen Polyole zur Herstellung von Polyurethanpolymeren. Geeignet sind insbesondere Polyetherpolyole, Polyesterpolyole, Poly(meth)acrylatpolyole, Polybutadienpolyole und Polycarbonatpolyole sowie Mischungen dieser Polyole.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten. Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.

Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 15'000 g/mol, sowie Polyoxyethylendiole, Polyoxyethylentriole, Polyoxypropylendiole und Polyoxypropylentriole mit einem Molekulargewicht von 400 bis 15'000 g/mol.

Ebenfalls besonders geeignet sind so genannte Ethylenoxid-terminierte ("EOendcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.

Weiterhin geeignet sind Hydroxylgruppen terminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte.

Weiterhin geeignet sind Styrol-Acrylnitril gepfropfte Polyetherpolyole, wie sie beispielsweise unter dem Handelsnamen Lupranol^{®} kommerziell erhältlich sind von der Firma Elastogran GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zweibis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.

Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Ebenfalls geeignet sind Polycarbonate, die aus der Copolymerisation von CO₂ mit Epoxiden, wie Ethylenoxid und Propylenxid, zugänglich sind. Besonders geeignet sind Polycarbonatdiole, insbesondere amorphe Polycarbonatdiole.

Weitere geeignete Polyole sind Poly(meth)acrylatpolyole.

Weiterhin geeignet sind polyhydroxyfunktionelle Fette und Öle, beispielsweise natürliche Fette und Öle, insbesondere Ricinusöl, oder durch chemische Modifizierung von natürlichen Fetten und Ölen gewonnene, so genannte oleochemische, Polyole, die beispielsweise durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole. Weiterhin geeignet sind Polyole, welche aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1 ,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol hergestellt werden und auch hydriert sein können.

Weiterhin geeignet sind polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro^{®} (früher Hycar^{®}) CTBN von der Firma Emerald Performance Materials, LLC, USA, hergestellt werden können.

Alle genannten Polyole weisen ein mittleres Molekulargewicht von 250 bis 15'000 g/mol, insbesondere von 400 bis 10'000 g/mol, bevorzugt von 1'000 bis 8'000 und eine mittlere OH-Funktionalität im Bereich von 1.5 bis 4, bevorzugt 1.7 bis 3, auf. Die Zusammensetzung kann jedoch durchaus auch Anteile an Monoolen (Polymere mit nur einer Hydroxylgruppe) enthalten.

Besonders geeignete Polyole sind Polyesterpolyole und Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Die erste Komponente **A** enthält weiterhin mindestens ein Diol **A2** mit zwei Hydroxylgruppen, die über eine C2- bis C9-Kohlenstoffkette verbunden sind.

Geeignet als Diol **A2** sind lineare oder verzweigte Alkylendiole mit zwei primären oder sekundären Hydroxylgruppen, Alkylendiole mit einer primären und einer sekundären Hydroxylgruppe sowie cycloaliphatische Diole.

Bevorzugt ist das Diol **A2** ein lineares aliphatisches Diol mit zwei primären Hydroxylgruppen, die über eine C4- bis C9-Kohlenstoffkette verbunden sind. Ein solches Diol hat den Vorteil, dass Polyurethane mit besonders hohen E-Moduln im Bereich niedriger Dehnung, beispielsweise zwischen 0 und 5%, erhalten werden, was insbesondere für Strukturklebstoffe vorteilhaft ist.

Insbesondere ist das Diol **A2** ausgewählt aus der Gruppe bestehend aus Ethylenglykol, 1,3-Propandiol, 1,4-Butandiol, 1,5-Pentandiol, 1,6-Hexandiol, 1,7-Heptandiol, 1,8-Octandiol, 1,9-Nonandiol, 1,3-Butandiol, 2,3-Butandiol, 2-Methyl-1,3-propandiol, 1,2-Pentandiol, 2,4-Pentandiol, 2-Methyl-1,4-butandiol, 2,2-Dimethyl-1,3-propandiol (Neopentylglykol), 1,2-Hexandiol, 1,4-Butandiol, 3-Methyl-1,5-pentandiol, 1,2-Octandiol, 3,6-Octandiol, 2-Ethyl-1,3-hexandiol, 2,2,4-Trimethyl-1,3-pentandiol, 2-Butyl-2-ethyl-1,3-propandiol, 2,7-Dimethyl-3,6-octandiol, 1,4-Cyclohexandiol, 1,3-Cyclohexandimethanol und 1,4-Cyclohexandimethanol.

Besonders bevorzugt ist das Diol **A2** ausgewählt aus der Gruppe bestehend aus 1,4-Butandiol, 1,5-Pentandiol, 1,6-Hexandiol, 1,7-Heptandiol, 1,8-Octandiol und 1,9-Nonandiol.

Am meisten bevorzugt ist das Diol **A2** ausgewählt aus der Gruppe bestehend aus 1,4-Butandiol, 1,5-Pentandiol, 1,6-Hexandiol und 1,9-Nonandiol. Diese Diole sind kommerziell gut zugänglich und ermöglichen Polyurethane mit besonders hohen E-Moduln bei geringer Dehnung nach der Aushärtung.

Bevorzugt enthält die erste Komponente **A** zwischen 5 und 25 Gew.-%, insbesondere 10 bis 15 Gew.-%, an Diol **A2.**

Zusätzlich zu diesen genannten Polyolen **A1** und **A2** können kleine Mengen von weiteren niedermolekularen zwei- oder mehrwertigen Alkoholen wie beispielsweise Diethylenglykol, Triethylenglykol, die isomeren Dipropylenglykole und Tripropylenglykole, die isomeren Decandiole und Undecandiole, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedermolekulare Alkoxylierungsprodukte der vorgenannten zwei- und mehrwertigen Alkohole, sowie Mischungen der vorgenannten Alkohole mitverwendet werden. Weiterhin können auch Polyole, die andere Heteroatome enthalten, wie beispielsweise Methyldiethanolamin oder Thiodiglykol, enthalten sein.

Die erste Komponente **A** enthält weiterhin mindestens eine Verbindung **T,** die mindestens eine Thiolgruppe aufweist. Geeignet sind alle Verbindungen, die mindestens eine Thiol- oder Mercaptogruppe aufweisen und die sich in der erfindungsgemässen Zusammensetzung einformulieren lassen. Als Thiolgruppe wird hier eine -SH Gruppe verstanden, die an einen organischen Rest, beispielsweise einen aliphatischen, cycloaliphatischen oder aromatischen Kohlenstoffrest, gebunden ist.

Bevorzugt sind Verbindungen mit 1 bis 6, insbesondere 1 bis 4, am meisten bevorzugt 1 oder 2 Thiolgruppen. Verbindungen mit einer Thiolgruppe haben den Vorteil, dass keine tendenziell schwerlöslichen Komplexe mit dem Metallkatalysator **K** entstehen und die Topfzeit besonders genau eingestellt werden kann. Verbindungen mit zwei Thiolgruppen haben den Vorteil, dass die mechanischen Eigenschaften der Zusammensetzung nach dem Aushärten verbessert werden.

Geeignete Verbindungen **T** mit einer Thiolgruppe sind beispielsweise 3-Mercaptopropyltrimethoxysilan, 3-Mercaptopropyltriethoxysilan, 3-Mercapto-1,2-propandiol, 2-Mercaptotoluimidazol oder 2-Mercaptobenzothiazol.

Geeignete Verbindungen **T** mit mehr als einer Thiolgruppe sind beispielsweise Ethylenglykol-di(3-mercaptopropionat), Ethylenglykol-dimercaptoacetat, Dipentaerythritol-hexa(3-mercaptopropionat), 2,3-Dimercapto-1,3,4-thiadiazol oder Pentaerythritol-tetrakis(3-mercaptopropionat).

Bevorzugt ist die Verbindung **T** ausgewählt aus der Gruppe bestehend aus Ethylenglykol-di(3-mercaptopropionat), Ethylenglykol-dimercaptoacetat, Dipentaerythritol-hexa(3-mercaptopropionat) und 3-Mercaptopropyltrimethoxysilan.

Das molare Verhältnis aller Thiolgruppen der mindestens einen Verbindung **T** zu allen Metallatomen des mindestens einen Metallkatalysators **K** muss zwischen 1:1 und 250:1 liegen. Bevorzugt liegt es zwischen 2:1 und 150:1, insbesondere zwischen 5:1 und 100:1. Durch dieses Mengenverhältnis kann die Topfzeit eingestellt werden, und zwar innerhalb der intrinsischen Grenzen der jeweiligen Zusammensetzung, bedingt beispielsweise durch den Gehalt an Katalysator, die Reaktivität der enthaltenen Isocyanate und deren Menge. Dabei ist die untere Grenze der Topfzeit diejenige Topfzeit, die in einer gegebenen Zusammensetzung bei Verwendung einer bestimmten Katalysatormenge ohne Zusatz der Verbindung **T** erhalten wird. In vielen Fällen, die für die erfindungsnahe Anwendung als Strukturklebstoff oder Kompositwerkstoffmatrix geeignet sind und bedingt durch die hohe Menge an Isocyanatgruppen in Anwesenheit eines Katalysators aber ohne Verbindung **T,** wird dabei gar keine wirkliche Topfzeit erreicht, und die Zusammensetzung beginnt praktisch beim Mischen der beiden Komponenten auszuhärten.

Die obere Grenze der einstellbaren Topfzeit ist dementsprechend diejenige Topfzeit, die ohne Verwendung eines Katalysators bedingt durch die unkatalysierte Isocyanat-Hydroxylreaktion erreicht werden würde. Diese Reaktion beginnt auch ohne Verwendung eines Katalysators irgendwann nach dem Mischen der beiden Komponenten anzulaufen. Allerdings läuft die Reaktion ohne Katalysator langsamer und unter Ausbildung minderwertiger mechanischer Eigenschaften des gehärteten Materials ab.

Der wesentliche Vorteil, der durch das erfindungsgemässe Verfahren auf Basis der zweikomponentigen Polyurethanzusammensetzung erreicht wird, ist ein ausserordentlich rasch aushärtendes und Festigkeit aufbauendes System, das aber gleichzeitig eine ausreichend lange Topfzeit aufweist, um anwenderfreundlich verarbeitet werden zu können. Somit können beispielsweise strukturelle Verklebungen auch an grösseren Substraten durchgeführt werden, die sehr kurz nach der Applikation des Klebstoffs bereits mechanisch belastet werden können. Dies führt beispielsweise zu einer signifikanten Verkürzung von Taktzeiten in der industriellen Fertigung. Ein weiterer Vorteil der erfindungsgemässen Polyurethanzusammensetzungen ist die Möglichkeit, die Topfzeit wie oben beschrieben einstellen zu können. Dies ist insbesondere für automatisierte Anwendungen sehr vorteilhaft und kann beispielsweise eine weitere Optimierung der Taktzeiten in der industriellen Fertigung ermöglichen, da die Topfzeit auf die gewünschte Anwendung eingestellt werden kann.

Die zweite Komponente **B** enthält zunächst mindestens ein Polyisocyanat **I**.

Das Polyisocyanat **I** ist in relativ hohen Mengen enthalten, was für die Ausbildung genügend guter mechanischer Eigenschaften für die Verwendung als Strukturklebstoff oder Kompositwerkstoffmatrix sehr vorteilhaft ist.

Die zweite Komponente enthält so viel an Polyisocyanat **I**, dass mindestens 5 Gew.-%, insbesondere mindestens 6 Gew.-%, bevorzugt mindestens 7.5 Gew.-%, bezogen auf die gesamte Polyurethanzusammensetzung, an Isocyanatgruppen enthalten sind.

Als Polyisocyanate **I** für die Herstellung des Polyurethanpolymers in der erfindungsgemässen Zusammensetzung können alle handelsüblichen, für die Polyurethanherstellung geeigneten Polyisocyanate, insbesondere Diisocyanate, verwendet werden.

Geeignete Polyisocyanate sind insbesondere monomere Di- oder Triisocyanate, sowie Oligomere, Polymere und Derivate der monomeren Di- oder Triisocyanate, sowie beliebige Mischungen davon.

Geeignete aromatische monomere Di- oder Triisocyanate sind insbesondere 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)benzol, Tris-(4-isocyanatophenyl)methan und Tris-(4-isocyanatophenyl)thiophosphat.

Geeignete aliphatische monomere Di- oder Triisocyanate sind insbesondere 1,4-Tetramethylendiisocyanat, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-lsocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)cyclohexan, mund p-Xylylendiisocyanat (m- und p-XDI), m- und p-Tetramethyl-1,3- und -1,4-xylylendiisocyanat (m- und p-TMXDI), Bis-(1-lsocyanato-1-methylethyl)naphthalin, Dimer- und Trimerfettsäureisocyanate wie 3,6-Bis-(9-isocyanatononyl)-4,5-di-(1-heptenyl)cyclohexen (Dimeryldiisocyanat) und α,α,α',α',α",α"-Hexamethyl-1,3,5-mesitylentriisocyanat.

Davon bevorzugt sind MDI, TDI, HDI und IPDI.

Geeignete Oligomere, Polymere und Derivate der genannten monomeren Di- und Triisocyanate sind insbesondere abgeleitet von MDI, TDI, HDI und IPDI. Davon insbesondere geeignet sind kommerziell erhältliche Typen, insbesondere HDI-Biurete wie Desmodur^{®} N 100 und N 3200 (von Covestro), Tolonate^{®} HDB und HDB-LV (von Vencorex) und Duranate^{®} 24A-100 (von Asahi Kasei); HDI-Isocyanurate, wie Desmodur^{®} N 3300, N 3600 und N 3790 BA (alle von Covestro), Tolonate^{®} HDT, HDT-LV und HDT-LV2 (von Vencorex), Duranate^{®} TPA-100 und THA-100 (von Asahi Kasei) und Coronate^{®} HX (von Nippon Polyurethane); HDI-Uretdione wie Desmodur^{®} N 3400 (von Covestro), HDI-Iminooxadiazindione wie Desmodur^{®} XP 2410 (von Covestro); HDI-Allophanate wie Desmodur^{®} VP LS 2102 (von Covestro); IPDI-Isocyanurate, wie beispielsweise in Lösung als Desmodur^{®} Z 4470 (von Covestro) oder in fester Form als Vestanat^{®} T1890/ 100 (von Evonik); TDI-Oligomere wie Desmodur^{®} IL (von Covestro); sowie gemischte Isocyanurate auf Basis TDI/HDI, zum Beispiel als Desmodur^{®} HL (von Covestro). Weiterhin insbesondere geeeignet sind bei Raumtemperatur flüssige Formen von MDI (sogenanntes "modifiziertes MDI"), welche Gemische von MDI mit MDI-Derivaten, wie insbesondere MDI-Carbodiimiden oder MDI-Uretoniminen oder MDI-Urethanen darstellen, bekannt unter Handelsnamen wie Desmodur^{®} CD, Desmodur^{®} PF, Desmodur^{®} PC (alle von Covestro) oder Isonate^{®} M 143 (von Dow), sowie Gemische aus MDI und MDI-Homologen (polymeres MDI oder PMDI), erhältlich unter Handelsnamen wie Desmodur^{®} VL, Desmodur^{®} VL50, Desmodur^{®} VL R10, Desmodur^{®} VL R20, Desmodur^{®} VH 20 N und Desmodur^{®} VKS 20F (alle von Covestro), Isonate^{®} M 309, Voranate^{®} M 229 und Voranate^{®} M 580 (alle von Dow) oder Lupranat^{®} M 10 R (von BASF). Die vorgenannten oligomeren Polyisocyanate stellen in der Praxis üblicherweise Gemische von Substanzen mit unterschiedlichen Oligomerisierungsgraden und/oder chemischen Strukturen dar. Vorzugsweise weisen sie eine mittlere NCO-Funktionalität von 2.1 bis 4.0 auf.

Bevorzugt ist das Polyisocyanat ausgewählt aus der Gruppe bestehend aus MDI, TDI, HDI und IPDI und Oligomeren, Polymeren und Derivaten der genannten Isocyanate, sowie Mischungen davon.

Bevorzugt enthält das Polyisocyanat Isocyanurat-, Iminooxadiazindion-, Uretdion-, Biuret-, Allophanat-, Carbodiimid-, Uretonimin- oder Oxadiazintrion-Gruppen.

Besonders bevorzugt als Polyisocyanat sind bei Raumtemperatur flüssige Formen von MDI. Dies sind insbesondere sogenannt polymeres MDI sowie MDI mit Anteilen von Oligomeren oder Derivaten davon. Der Gehalt an MDI (=4,4'-, 2,4'- oder 2,2'-Diphenylmethandiisocyanat und beliebige Gemische dieser Isomeren) solcher flüssiger Formen von MDI beträgt insbesondere 50 bis 95 Gew.-%, insbesondere 60 bis 90 Gew.-%.

Insbesondere bevorzugt als Polyisocyanat ist polymeres MDI und bei Raumtemperatur flüssige MDI-Typen, welche Anteile von MDI-Carbodiimiden oder deren Addukte enthalten.

Mit diesen Polyisocyanaten werden besonders gute Verarbeitungseigenschaften und besonders hohe Festigkeiten erhalten.

Das Polyisocyanat der zweiten Komponente kann Anteile von Isocyanatgruppen aufweisenden Polyurethanpolymeren enthalten. Entweder kann die zweite Komponente ein separat hergestelltes Isocyanatgruppen aufweisendes Polyurethanpolymer umfassen, oder das Polyisocyanat wurde mit mindestens einem Polyol, insbesondere einem Polyetherpolyol, vermischt, wobei die Isocyanatgruppen gegenüber den OH-Gruppen in einem stöchiometrischen Überschuss vorliegen.

In der erfindungsgemässen Zusammensetzung ist Polyisocyanat **I** bevorzugt in einer Menge von 10 Gew.-% bis 35 Gew.-%, insbesondere 15 Gew.-% bis 30 Gew.-%, besonders bevorzugt 20 Gew.-% bis 25 Gew.-%, bezogen auf die gesamte Zusammensetzung, vorhanden.

Die erste Komponente **A** und/oder die zweite Komponente **B** enthält weiterhin mindestens einen Metallkatalysator **K** für die Reaktion von Hydroxylgruppen und Isocyanatgruppen, der Thiokomplexe bilden kann. Als Metallkatalysator **K** sind somit alle Metallkatalysatoren geeignet, welche in der Polyurethanchemie als Vernetzungskatalysator eingesetzt werden können und gleichzeitig in Gegenwart von Thiolen mit diesen Thiokomplexe bilden können.

Bevorzugt ist der Metallkatalysator **K** nur in der ersten Komponente **A** enthalten. Dies hat den Vorteil, dass eine bessere Lagerstabilität erreicht wird.

Geeignete Metallkatalysatoren sind beispielsweise Bismut-, Zink-, Zinn- oder Zirkoniumverbindungen, was Komplexe und Salze dieser Metalle einschliesst.

Bevorzugt umfasst der Metallkatalysator **K** eine Bismut-Verbindung, insbesondere eine Bismut(III)-Verbindung. Eine Bismut-Verbindung hat den Vorteil, dass sie, neben den erwünschten Eigenschaften als Katalysator und Thiokomplex-Bildner, eine geringe Akuttoxizität besitzt.

Als Bismut-Verbindung kann eine Vielzahl von herkömmlichen Bismut-Katalysatoren verwendet werden. Dabei handelt es sich beispielsweise um Bismutcarboxylate wie z.B. Bismut-Acetat, -Oleat, -Octoat oder -Neodecanoat, Bismutnitrat, Bismuthalogenide wie z.B. Bromid, Chlorid, lodid, Bismutsulfid, basische Bismutcarboxylate wie z.B. Bismutyl-neodecanoat, Bismut-subgallat oder Bismut-subsalicylat, sowie Gemische davon.

In einer bevorzugten Ausführungsform ist der Metallkatalysator **K** ein Bismut(III)-Komplex, der mindestens einen Liganden auf 8-Hydroxychinolinbasis aufweist. Solche Komplexe sind beschrieben in der EP 1551895. Bevorzugt handelt es sich dabei um ein Bismut(III)-Carboxylat, das ein Moläquivalent eines 8-Hydroxychinolinliganden aufweist.

In einer weiteren bevorzugten Ausführungsform ist der Metallkatalysator **K** ein Bismut(III)-Komplex, der mindestens einen Liganden auf 1,3-Ketoamidbasis aufweist. Solche Komplexe sind beschrieben in der EP 2791153. Bevorzugt handelt es sich dabei um ein Bismut(III)-Carboxylat, das 1 bis 3 Moläquivalente eines 1,3-Ketoamidliganden aufweist.

Die Polyurethanzusammensetzung kann neben den bereits erwähnten weitere Bestandteile, wie sie der Fachmann aus der Zweikomponenten-Polyurethanchemie her kennt, enthalten. Diese können in nur einer Komponente oder in beiden vorhanden sein.

Als weitere Bestandteile bevorzugt sind anorganische und organische Füllstoffe, wie insbesondere natürliche, gemahlene oder gefällte Calciumcarbonate, welche gegebenenfalls mit Fettsäuren, insbesondere Stearinsäure, beschichtet sind, Baryt (Schwerspat), Talke, Quarzmehle, Quarzsand, Dolomite, Wollastonite, Kaoline, calcinierte Kaoline, Mica (Kalium-Aluminium-Silikat), Molekularsiebe, Aluminiumoxide, Aluminiumhydroxide, Magnesiumhydroxid, Kieselsäuren inklusive hochdisperse Kieselsäuren aus Pyrolyseprozessen, industriell hergestellte Russe, Graphit, Metallpulver wie Aluminium, Kupfer, Eisen, Silber oder Stahl, PVC-Pulver oder Hohlkugeln, sowie flammhemmende Füllstoffe, wie Hydroxide oder Hydrate, insbesondere Hydroxide oder Hydrate von Aluminium, bevorzugt Aluminiumhydroxid.

Die Zugabe von Füllstoffen ist dahingehend von Vorteil, dass dadurch die Festigkeit der ausgehärteten Polyurethanzusammensetzung erhöht wird. Bevorzugt enthält die Polyurethanzusammensetzung mindestens einen Füllstoff ausgewählt aus der Gruppe bestehend aus Calciumcarbonat, Russ, Kaolin, Baryt, Talk, Quarzmehl, Dolomit, Wollastonit, Kaolin, calciniertes Kaolin und Glimmer (Mica). Als Füllstoffe besonders bevorzugt sind gemahlene Calciumcarbonate, calcinierte Kaoline oder Russ.

Es ist kann von Vorteil sein, eine Mischung verschiedener Füllstoffe einzusetzen. Am meisten bevorzugt sind Kombinationen von gemahlenen Calciumcarbonaten oder calcinierten Kaolinen und Russ.

Der Gehalt an Füllstoff **F** in der Zusammensetzung liegt bevorzugt im Bereich von 5 Gew.-% bis 50 Gew.-%, insbesondere 10 Gew.-% bis 40 Gew.-%, besonders bevorzugt 15 Gew.-% bis 30 Gew.-%, bezogen auf die gesamte Zusammensetzung.

Als weitere Bestandteile können weiterhin insbesondere Lösungsmittel, Weichmacher und/oder Extender, Pigmente, Rheologiemodifizierer wie insbesondere amorphe Kieselsäuren, Trocknungsmittel wie insbesondere Zeolithe, Haftvermittler wie insbesondere organofunktionelle Trialkoxysilane, Stabilisatoren gegen Oxidation, Wärme, Licht- und UV-Strahlung, flammhemmende Substanzen, sowie oberflächenaktive Substanzen, insbesondere Netzmittel und Entschäumer, vorhanden sein.

Die Polyurethanzusammensetzung enthält bevorzugt weniger als 0.5 Gew.-%, insbesondere weniger als 0.1 Gew.-%, bezogen auf die gesamte Zusammensetzung, an Carbonsäuren. Allenfalls durch den Metallkatalysator eingebrachte Carboxylatliganden zählen hierbei nicht zu den gemeinten Carbonsäuren.

Eine bevorzugte Polyurethanzusammensetzung enthält eine erste Komponente **A,** welche
- 30 bis 90 Gew.-%, bevorzugt 40 bis 80 Gew.-%, insbesondere 50 bis 70 Gew.-%, Polyol **A1,**
- 5 bis 25 Gew.-%, bevorzugt 10 bis 20 Gew.-%, insbesondere 12 bis 18 Gew.-%, Diol **A2,**
- 1 bis 5 Gew.-%, bevorzugt 1.25 bis 3 Gew.-%, insbesondere 1.5 bis 2 Gew.-%, einer Verbindung **T,** die mindestens eine Thiolgruppe aufweist,
- 0.05 bis 0.5 Gew.-%, bevorzugt 0.1 bis 0.3 Gew.-%, insbesondere 0.15 bis 0.2 Gew.-%, eines Metallkatalysators **K,** und
- 10 bis 50 Gew.-%, bevorzugt 15 bis 40 Gew.-%, insbesondere 20 bis 30 Gew.-%, Füllstoffe,
   sowie gegebenenfalls weitere Bestandteile enthält.

Eine bevorzugte Polyurethanzusammensetzung enthält eine zweite Komponente **B,** welche 80 bis 100 Gew.-% Polyisocyanat **I** enthält.

Die erste und die zweite Komponente werden vorteilhaft so formuliert, dass ihr Mischungsverhältnis in Gewichtsteilen im Bereich von 10:1 bis 1:10 liegt.

In der vermischten Polyurethanzusammensetzung liegt das Verhältnis zwischen der Anzahl Isocyanatgruppen und der Anzahl gegenüber Isocyanaten reaktiven Gruppen, insbesondere Hydroxylgruppen, vor der Aushärtung im Bereich von 0.9 : 1 - 1.2 : 1, bevorzugt 1.0 : 1 - 1.1 : 1.

Die Polyurethanzusammensetzung ist direkt nach Mischen der Komponenten **A** und **B** bei 23 °C fliessfähig, bevorzugt selbstnivellierend. Das bedeutet, dass sie als Vergussmasse eingesetzt werden kann und Hohlräume ausfüllen kann. Es ist möglich und kann sinnvoll sein, dass die Zusammensetzung eine leichte Thixotropie aufweist. In einigen bevorzugten Ausführungsformen ist die Zusammensetzung nach Mischen selbstnivellierend.

Die Polyurethanzusammensetzung besitzt direkt nach Mischen der Komponenten **A** und **B** eine Viskosität, gemessen bei 20°C auf einem Platten-Platten Viskosimeter mit Plattenabstand 1 mm und Plattendurchmesser 25 mm, von < 5000 Pa·s, bevorzugt < 4000 Pa·s, bei einer Scherrate von 0.01 s⁻¹ und < 500 Pa·s, bevorzugt < 200 Pa·s, bei einer Scherrate von 1 s⁻¹ und < 50 Pa·s, bevorzugt < 30 Pa·s, bei einer Scherrate von 10 s⁻¹.

Die Viskosität kann durch Formulierungsmassnahmen, beispielsweise der Auswahl der Polyole und/oder Füllstoffe und den Einsatz von niedrigviskosen Zusätzen wie Weichmachern durch Routineversuche eingestellt werden.

Die Herstellung der beiden Komponenten erfolgt getrennt voneinander und vorzugsweise unter Ausschluss von Feuchtigkeit. Beide Komponenten werden typischerweise jeweils in einem eigenen Gebinde gelagert. Die weiteren Bestandteile der Polyurethanzusammensetzung können als Bestandteil der ersten oder der zweiten Komponente vorhanden sein, wobei gegenüber Isocyanatgruppen reaktive weitere Bestandteile bevorzugt ein Bestandteil der ersten Komponente sind. Ein geeignetes Gebinde zum Lagern der jeweiligen Komponente ist insbesondere ein Fass, ein Hobbock, ein Beutel, ein Eimer, eine Büchse, eine Kartusche oder eine Tube. Die Komponenten sind beide lagerstabil, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern.

Die beiden Komponenten werden vor dem Vermischen der Zusammensetzung getrennt voneinander gelagert und erst bei oder unmittelbar vor der Anwendung miteinander vermischt. Sie sind vorteilhaft in einer Verpackung, welche aus zwei voneinander getrennten Kammern besteht, vorhanden.

In einem weiteren Aspekt wird eine Packung bestehend aus einer Verpackung mit zwei voneinander getrennten Kammern, welche jeweils die erste Komponente beziehungsweise die zweite Komponente der Zusammensetzung enthält offenbart.

Das Mischen erfolgt typischerweise über Statikmischer oder mit Hilfe von dynamischen Mischern. Beim Mischen ist darauf zu achten, dass die beiden Komponenten möglichst homogen vermischt werden. Werden die zwei Komponenten unvollständig gemischt, treten lokale Abweichungen vom vorteilhaften Mischungsverhältnis auf, was sich in einer Verschlechterung der mechanischen Eigenschaften auswirken kann.

Beim Kontakt der ersten Komponente mit der zweiten Komponente beginnt, nach der Latenzzeit des Katalysators durch die Reaktion mit den Thiolen der Verbindung **T,** die Aushärtung durch chemische Reaktion. Dabei reagieren die Hydroxylgruppen und gegebenenfalls vorhandene weitere gegenüber Isocyanatgruppen reaktive Substanzen mit den Isocyanatgruppen. Überschüssige Isocyanatgruppen reagieren vorwiegend mit Feuchtigkeit. Als Resultat dieser Reaktionen härtet die Polyurethanzusammensetzung zu einem festen Material aus. Dieser Vorgang wird auch als Vernetzung bezeichnet.

Ein weiterer Gegenstand der Erfindung ist somit auch eine ausgehärtete Polyurethanzusammensetzung, erhalten aus der Aushärtung der Polyurethanzusammensetzung wie im vorliegenden Dokument beschrieben.

Die beschriebene Polyurethanzusammensetzung zeichnet sich durch eine hohe Festigkeit und Elastizität, welche über einen weiten Temperaturbereich von - 35 bis 85 °C recht konstant sind, und über gute, weitgehend temperaturunabhängige Haftungseigenschaften aus. Aufgrund dieser Eigenschaften ist sie ganz besonders geeignet als Vergussmasse, welche unter Umgebungstemperaturen im Freien verwendet wird.

Somit ist die beschriebene Polyurethanzusammensetzung vorteilhaft verwendbar als Vergussmasse, insbesondere als Vergussmasse für das Verfüllen von Spalten und Fugen, zu Reparaturzwecken, als Ballastausgleichsmasse oder zum Schutz von elektronischen Bauteilen.

Die Polyurethanzusammensetzung wird weiter vorzugsweise als Vergussmasse, insbesondere als Elektrovergussmasse, eingesetzt. In einem weiteren Aspekt wird die Verwendung einer zweikomponentigen Polyurethanzusammensetzung als Vergussmasse, insbesondere als Elektrovergussmasse offenbart.

Die Erfindung umfasst ein Verfahren zum Verfüllen von Hohlräumen, Fugen und Spalten in einem Substrat gemäss Anspruch 1, umfassend die Schritte
a) Mischen der ersten Komponente **A** und der zweiten Komponente **B** einer zweikomponentigen Polyurethanzusammensetzung wie sie vorgehend beschrieben ist,
b) Eingiessen der gemischten Polyurethanzusammensetzung den zu verfüllenden Hohlraum, die zu verfüllende Fuge oder den zu verfüllenden Spalt des Substrates,
c) Aushärten der Polyurethanzusammensetzung im Hohlraum, in der Fuge oder im Spalt.

In diesen Verfahren zum Verkleben oder zum Verfüllen von Hohlräumen, Fugen und Spalten sind geeignete Substrate insbesondere
- Glas, Glaskeramik, Glasmineralfasermatten;
- Metalle und Legierungen, wie Aluminium, Eisen, Stahl und Buntmetalle, sowie oberflächenveredelte Metalle und Legierungen, wie verzinkte oder verchromte Metalle;
- beschichtete und lackierte Substrate, wie pulverbeschichtete Metalle oder Legierungen und lackierte Bleche;
- Kunststoffe, wie Polyvinylchlorid (Hart- und Weich-PVC), Acrylonitril-Butadien-Styrol-Copolymere (ABS), Polycarbonat (PC), Polyamid (PA), Poly(methylmethacrylat) (PMMA), Polyester, Epoxidharze insbesondere Thermosets auf Epoxybasis, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Flammen oberflächenbehandelt sein können;
- Faserverstärkte Kunststoffe, wie kohlefaserverstärkte Kunststoffe (CFK), glasfaserverstärkte Kunststoffe (GFK) und Sheet Moulding Compounds (SMC);
- Holz, mit Harzen, beispielsweise Phenol-, Melamin- oder Epoxidharzen, gebundene Holzwerkstoffe, Harz-Textil-Verbundwerkstoffe und weitere sogenannte Polymer-Composites; sowie
- Beton, Asphalt, Mörtel, Ziegel, Gips und Natursteine wie Granit, Kalk- und Standstein oder Marmor.

Als Substrate besonders geeignet sind Beton, Asphalt, Metall, Kunststoff, Holz, Glas, Keramik und faserverstärkte Kunststoffe, insbesondere Metall und faserverstärkte Kunststoffe.

In einer bevorzugten Ausführungsform dieses Verfahrens wird vor dem Aushärten der gemischten Polyurethanzusammensetzung ein weiterer Gegenstand in die noch nicht gehärtete Zusammensetzung teilweise oder ganz eingetaucht oder mit der noch nicht gehärteten Zusammensetzung oberflächlich in Kontakt gebracht, so dass der weitere Gegenstand nach Aushärten der Zusammensetzung mit der gehärteten Zusammensetzung zumindest teilweise stoffschlüssig verbunden ist. Dies hat zur Folge, dass dieser weitere Gegenstand nach Aushärten der Zusammensetzung in dieser verankert oder zumindest auf dieser festgeklebt ist.

Solche weiteren Gegenstände können aus einem beliebigen Material sein, bevorzugt aus Metall, Kunststoff oder Holz, oder aus oberflächenbeschichteten solchen Materialien, beispielsweise pulverlackiertem Metall. Falls diese Gegenstände in die noch nicht ausgehärtete Zusammensetzung eingetaucht werden, so ist es meist nicht einmal notwendig, dass das Material des Gegenstands mit der Polyurethanzusammensetzung Adhäsion aufbauen kann.

Je nach Geometrie des Gegenstands kann so eine mechanische Verankerung erreicht werden, unabhängig vom Material des Gegenstands, indem die ausgehärtete Zusammensetzung Einbuchtungen und Hohlräume des Gegenstands ausfüllt. Auf diese Weise können auch normalerweise nicht verklebbare Materialien wie Polytetrafluoroethylen (PTFE) oder andere Kunststoffe mit ähnlich niederenergetischen Oberflächen fest mit der Polyurethanzusammensetzung verbunden werden.

Solche weiteren Gegenstände können eine beliebige Form und Geometrie haben. Beispielsweise ist es möglich, auf diese Weise Gegenstände in der ausgehärteten Zusammensetzung zu verankern, oder die ausgehärtete Zusammensetzung mit funktionellen Elementen wie Griffen, Armierungen oder Schrauben zu versehen. Es ist auch möglich, Verbundsstoffe auf diese Weise herzustellen, beispielweise durch Geflechte, Fasern oder Gitter verstärkte Polyurethanzusammensetzungen.

Eine besondere Ausführungsform dieses Verfahrens mit einem weiteren Element wird in einem Hohlraum ausgeführt, welcher keine Adhäsion zur aushärtenden Polyurethanzusammensetzung aufbaut. Dies hat zur Folge, dass nach dem Aushärten die ausgehärtete Zusammensetzung einfach aus dem Hohlraum entfernt werden kann. Somit dient der Hohlraum in dieser Ausführungsform als insbesondere wiederverwendbare Gussform. Damit kann beispielsweise dieser weitere Gegenstand wie oben beschrieben mit einer auf der Oberfläche des Gegenstandes adhäsiv befestigten Struktur aus ausgehärteter Polyurethanzusammensetzung versehen werden. Dies stellt ein Verfahren zum Aufkleben einer Form aus erfindungsgemässer Polyurethanzusammensetzung auf einem Element dar.

Die Gussform selbst erlaubt die Festlegung einer genauen, dreidimensionalen Form der ausgehärteten Zusammensetzung. Geeignete Materialien für eine nicht adhäsive Gussform sind sehr niedrigenergetische Kunststoffe wie Polyethylen, Polypropylen und fluorierte Polyolefine wie beispielsweise PTFE, sowie Gussformen welche beispielsweise mit losen Pulvern, Mehlen, niederenergetischen Polymeren oder Siliconölen behandelt oder beschichtet worden sind, welche eine Grenzfläche zur Oberfläche der Gussform bilden.

Somit ist eine bevorzugte Ausführungsform des obengenannten Verfahrens dadurch gekennzeichnet, dass die Oberfläche des Hohlraums, der Fuge oder des Spalts aus einem Material besteht, das keine Adhäsion zur aushärtenden oder ausgehärteten Polyurethanzusammensetzung aufbaut. Als "Adhäsion" wird in dieser Ausführungsform eine Adhäsionskraft verstanden, die so stark ist, dass die ausgehärtete Polyurethanzusammensetzung nicht rückstandsfrei aus dem Hohlraum entfernt werden kann.

In einem weiteren Aspekt umfasst die Erfindung daher auch einen verfüllten Artikel, welcher nach dem vorgehend beschriebenen Verfahren verfüllt wurde.

### Beispiele

**Tabelle 1: Verwendete Substanzen**

| | |
|---|---|
| Voranol CP 4755 | Voranol^{®} CP 4755 (Dow Chemical); Polyethertriol, CAS Nr. 9082-00-2; Mw: 5000 g/mol; OH-Zahl: 35 mg KOH/g |
| Acclaim 4200 | Acclaim^{®} Polyol 4200 (Covestro); Polyetherdiol, Mₙ: approx. 4000 g/mol; OH-Zahl: 26.5-29.5 mg KOH/g |
| Ethacure | Ethacure^{®} 300 (Albermarle); 6-Methyl-2,4-bis(methylthio)phenylen-1,3-diamin (Aminvernetzer) |
| 1,5-Pentandiol | (Sigma Aldrich) |
| DIDP | Jayflex^{®} DIDP (ExxonMobil Chemical); Diisodecylphthalat (Weichmacher) |
| Thiocure GDMP | Thiocure^{®} GDMP (Bruno Bock Thiochemicals); Glycol-di(3-mercaptopropionat) |
| Desmodur CD-L | Desmodur^{®} CD-L (Covestro); modifiziertes Diphenylmethan-4,4'diisocyanat (MDI); NCO-Gehalt: 29.5 Gew.-% |
| Monarch 570 | Monarch^{®} 570 (Cabot Corp.); Russ (Füllstoff) |
| Omya BL | Omya^{®} BL (Omya); gemahlene, natürliche Kreide (Füllstoff) |
| Bi-Kat. (2.68 mmol Bi /g) | 35 Gew.-% Coscat 83 (Organobismut-Katalysator; Coscat^{®} 83 (Vertellus Specialties Inc.)) in Weichmacher mit 1 Moläquivalent 8-Hydroxychinolin (bezogen auf Bi) |
| Sn-Kat. | Dibutylzinndilaurat (Sigma Aldrich) |

### Herstellung von Polyurethanzusammensetzunaen

Für jede Zusammensetzung wurden die in der Tabelle 2 angegebenen Inhaltsstoffe in den angegebenen Mengen (in Gewichtsteilen oder Gew.-%) der ersten Komponente **A** mittels eines Vakuumdissolvers unter Feuchtigkeitsausschluss zu einer homogenen Paste verarbeitet und aufbewahrt. Ebenso wurden die in den Tabellen angegebenen Inhaltsstoffe der zweiten Komponente **B** verarbeitet und aufbewahrt. Anschliessend wurden die beiden Komponenten mittels eines SpeedMixers^{®} (DAC 150 FV, Hauschild) während 30 Sekunden zu einer homogenen Paste verarbeitet und diese unverzüglich folgendermassen geprüft:
Zur Bestimmung der mechanischen Eigenschaften wurden die Zusammensetzungen während 7 Tagen bei 23°C, 50% r.h. ausgehärtet und es wurden das Elastizitätsmodul (" **E-Modul")** im Bereich von 0.5 bis 5 % Dehnung und 0.05 bis 0.25% Dehnung, die **Zugfestigkeit** und die **Bruchdehnung** der so hergestellten Probekörper gemäss DIN EN ISO 527 auf einer Zwick Z020 Zugprüfmaschine bei 23°C und 50% r.h. und einer Prüfgeschwindigkeit von 10 mm/ min gemessen.

Die **Shore A**-Härte wurde bestimmt nach DIN 53505, an während bei 23°C und 50% relativer Luftfeuchtigkeit ausgehärteten Probekörpern mit einer Schichtdicke von 6 mm. Die genaue Lagerungszeit (Aushärtungszeit) bis zur jeweiligen Messung ist in der Tabelle 3 angegeben.

Die **Tg**-Werte (Glasübergangstemperaturen) wurden bestimmt anhand von DMA-Messungen an quaderförmigen Proben (43.515 mm x 10 mm x 1.49 mm), welche während 7 Tagen im Normklima ("NK"; 23°C, 50% relative Feuchtigkeit "r.h.") ausgehärtet waren, mit einem Rheoplus MCR 302 Gerät von Anton Paar. Die Messbedingungen waren: Messung in Scherung, 1 Hz Anregungsfrequenz und Aufheizrate von 5 K/min. Die Proben wurden auf -100°C abgekühlt und unter Bestimmung des komplexen Schermoduls G* [MPa] auf 100°C erwärmt, wobei ein Maximum in der Kurve für den Verlustwinkel "tan δ" als Tg-Wert abgelesen wurde. Die **Topfzeit** wurde in einem Viskosimeter gemessen als Zeit, bis die Viskosität nach Mischen der beiden Komponenten 500 Pa·s betrug. Die Messung der Viskosität erfolgte auf einem Platten-Platten Rheometer MCR 302 (Firma Anton Paar) mit einem Plattendurchmesser von 25 mm und einem Plattenabstand von 1 mm bei einer Frequenz von 0.1 s⁻¹ und einer Temperatur von 20°C. Dazu wurden die beiden Komponenten zunächst während 30 sec in einem Speedmixer (Firma Hauschild) gemischt und sofort für die Messung auf die Platten aufgebracht.

Die Messung der **Viskosität** erfolgte auf einem Platten-Platten Rheometer MCR 302 (Firma Anton Paar) mit einem Plattendurchmesser von 25 mm und einem Plattenabstand von 1 mm bei einer Frequenz von 0.01 s⁻¹, 1 s⁻¹ und 10 s⁻¹ und einer Temperatur von 20°C. Dazu wurden die beiden Komponenten zunächst während 30 sec in einem Speedmixer (Firma Hauschild) gemischt und sofort für die Messung auf die Platten aufgebracht.

**Tabelle 2: Hergestellte Beispielzusammensetzungen**

| **Beispiel** | **C-1** (Ref.) | **C-2** |
|---|---|---|
| Erste Komponente **A** (Mengen in Gewichtsteilen) | | |
| Voranol CP 4755 | 27 | 28 |
| Acclaim 4200 | 27 | 28 |
| Ethacure | 7 | - |
| 1,5-Pentandiol | - | 4.5 |
| Omya BL | 20.95 | 28 |
| Monarch 570 | 1 | 1 |
| DIDP | 17 | 8.7 |
| Bi-Kat. (2.68 mmol Bi /g) | - | 0.1 |
| Sn-Kat. | 0.05 | - |
| Thiocure GDMP | - | 1.7 |
| *TOTAL* | *100* | *100* |

| Zweite Komponente **B** (Mengen in Gewichtsteilen) | | |
|---|---|---|
| Desmodur CD-L | 100 | 100 |
| *TOTAL* | *100* | *100* |

| Mischung **A** und **B** | | |
|---|---|---|
| Mischverhältnis (Volumen) **A: B** | 100 : 15 | 100 : 15 |
| Molverhältnis SH : Bi | - | 53 : 1 |

**Tabelle 3: Messwerte der Beispielzusammensetzungen**

| **Messwert** | **C-1** (Ref.) | **C-2** |
|---|---|---|
| Tg (°C) | -57.64 | -36.71 |
| Topfzeit (min) | 10 | 55 |
| Shore A (nach 1h) | 31 | 49 |
| Shore A (nach 2h) | 36 | 54 |
| Shore A (nach 4h) | 62 | 57 |
| Shore A (nach 24h) | 67 | 60 |
| Shore A (nach 7d) | 70 | 60 |
| Zugfestigkeit (MPa) | 2.53 | 2.42 |
| Bruchdehnung (%) | 105.8 | 139.1 |
| E-Modul 0.05-0.25% (MPa) | 12.5 | 11.5 |
| E-Modul 0.5-5% (MPa) | 9.2 | 8.6 |
| Viskosität (frisch gemischt) (Pa·s) (0.01 s⁻¹) | 45.8 | 3070 |
| Viskosität (frisch gemischt) (Pa·s) (1 s⁻¹) | 15 | 103 |
| Viskosität (frisch gemischt) (Pa·s) (10 s⁻¹) | 8.23 | 21.1 |

Die Resultate der Tabelle 3 zeigen, dass die mechanischen Werte der beiden Zusammensetzungen nach vollständiger Aushärtung sowie die Tg Werte vergleichbar sind. Deutliche Unterschiede ergeben sich bei der Topfzeit, die im erfindungsgemässen Beispiel viel höher ist als im Referenzbeispiel. Weiterhin erreicht das erfindungsgemässe Beispiel viel schneller die Endwerte bezüglich Shore A Härte. Die Viskositäten beider Zusammensetzungen zeigen die Eignung als Vergussmasse.

**Tabelle 4: Viskositätsentwicklung der Beispielzusammensetzungen (0.1 s⁻¹)**

| **Zeit** (min nach Mischung) | **C-1** (Ref.) (Viskosität in Pa·s) | **C-2** (Viskosität in Pa·s) |
|---|---|---|
| 1 | 24.67 | 130.2 |
| 5 | 96.53 | 146 |
| 10 | 493.6 | 154 |
| 20 | 4`971 | 167 |
| 30 | 14`610 | 186 |
| 40 | 26`560 | 217 |
| 50 | 39`220 | 292.6 |
| 60 | 51 `830 | 8'680 |
| 70 | 64'070 | 107`700 |
| 80 | 75`770 | 213`900 |
| 90 | 86`880 | 284'400 |

Tabelle 4 vergleicht die Entwicklung der Viskosität (Scherrate 0.1 s⁻¹) über die Zeit für beide Zusammensetzungen. Es ist deutlich zu sehen dass das erfindungsgemässe Beispiel über einen langen Zeitraum (Topfzeit) hinweg fast konstant niedrige Viskosität aufweist, dann aber sehr rasch an Viskosität gewinnt wenn die Härtungsreaktion anzulaufen beginnt. Das Vergleichsbeispiel hingegen zeigt einen von Anfang an langsam steigenden Viskositätsanstieg, der aber dann vom erfindungsgemässen Beispiel überholt wird. Somit ist im erfindungsgemässen Beispiel eine verbesserte Verarbeitbarkeit während der Topfzeit gegeben (konstante Viskosität), aber danach eine viel schnellere Aushärtung als im Referenzbeispiel.

## Patentansprüche

1. Verfahren zum Verfüllen von Hohlräumen, Fugen und Spalten in einem Substrat, umfassend die Schritte
a) Mischen der ersten Komponente **A** und der zweiten Komponente **B** einer zweikomponentigen Polyurethanzusammensetzung bestehend aus einer ersten Komponente **A** und einer zweiten Komponente **B;** wobei
- die erste Komponente **A**
- mindestens ein Polyol **A1** mit einer OH-Funktionalität im Bereich von 1.5 bis 4 und einem mittleren Molekulargewicht (Zahlenmittel) Mₙ, gemessen mittels GPC gegen Polystyrol, im Bereich von 250 bis 15'000 g/mol, und
- mindestens ein Diol **A2** mit zwei Hydroxylgruppen, die über eine C2- bis C9-Kohlenstoffkette verbunden sind, und
- mindestens eine Verbindung **T,** die mindestens eine Thiolgruppe aufweist, umfasst; und
- die zweite Komponente **B**
- mindestens ein Polyisocyanat **I** umfasst;
wobei in einer der Komponenten zusätzlich mindestens ein Metallkatalysator **K** für die Reaktion von Hydroxylgruppen und Isocyanatgruppen enthalten ist, der Thiokomplexe bilden kann;
und wobei das molare Verhältnis aller Thiolgruppen der mindestens einen Verbindung **T** zu allen Metallatomen des mindestens einen Metallkatalysators **K** zwischen 1:1 und 250:1 liegt;
und wobei das molare Verhältnis aller NCO-Gruppen der Polyisocyanate I zu allen OH-Gruppen der Polyole **A1** und **A2** = 0.9 - 1 - 1.2 - 1, insbesondere 1.0 - 1 - 1.1 - 1, beträgt;
und wobei die Polyurethanzusammensetzung direkt nach Mischen der Komponenten **A** und **B** bei 23°C fliessfähig, bevorzugt selbstnivellierend ist und eine Viskosität, gemessen bei 20°C auf einem Platten-Platten Viskosimeter mit Plattenabstand 1 mm und Plattendurchmesser 25 mm, von < 5000 Pa.s bei einer Scherrate von 0.01 s⁻¹ und < 500 Pa.s bei einer Scherrate von 1 s⁻¹ und < 50 Pa s bei einer Scherrate von 10 s⁻¹, aufweist;
b) Eingiessen der vermischten Polyurethanzusammensetzung in den zu verfüllenden Hohlraum, die zu verfüllende Fuge oder den zu verfüllenden Spalt des Substrates;
c) Aushärten der Polyurethanzusammensetzung im Hohlraum, in der Fuge oder im Spalt.

2. Verfahren gemäss Anspruch 1, **dadurch gekennzeichnet, dass** der Metallkatalysator **K** eine Bismut(III)-Verbindung umfasst, bevorzugt ein Bismut(III)-carboxylat.

3. Verfahren gemäss einem der Ansprüche 1 oder 2, **dadurch gekennzeichnet, dass** das Diol **A2** ausgewählt ist aus der Gruppe bestehend aus 1,3-Butandiol, 1,4-Butandiol, 2,3-Butandiol, 2-Methyl-1,3-propandiol, 1,2-Pentandiol, 2,4-Pentandiol, 2-Methyl-1,4-butandiol, 2,2-Dimethyl-1,3-propandiol, 1,2-Hexandiol, 3-Methyl-1,5-pentandiol, 1,2-Octandiol, 3,6-Octandiol, 2-Ethyl-1,3-hexandiol, 2,2,4-Trimethyl-1,3-pentandiol, 2-Butyl-2-ethyl-1,3-propandiol, 2,7-Dimethyl-3,6-octandiol, 1,4-Cyclohexandiol, 1,3-Cyclohexandimethanol und 1,4-Cyclohexandimethanol.

4. Verfahren gemäss einem der vorhergehenden Ansprüche, **dadurch gekennzeichnet, dass** die mindestens eine Verbindung **T** eine Polythiolverbindung mit 2 bis 6 Thiolgruppen oder ein Mercaptosilan umfasst.

5. Verfahren gemäss Anspruch 4, **dadurch gekennzeichnet, dass** die mindestens eine Verbindung **T** ausgewählt ist aus der Gruppe bestehend aus Ethylenglykol-di(3-mercaptopropionat), Ethylenglykol-dimercaptoacetat, Dipentaerythritol-hexa(3-mercaptopropionat) und 3-Mercaptopropyltrimethoxysilan.

6. Verfahren gemäss einem der vorhergehenden Ansprüche, **dadurch gekennzeichnet, dass** das molare Verhältnis aller Thiolgruppen der mindestens einen Verbindung **T** zu allen Metallatomen des mindestens einen Metallkatalysators **K** zwischen 5:1 und 100:1 liegt.

7. Verfahren gemäss einem der vorhergehenden Ansprüche, **dadurch gekennzeichnet, dass** der Metallkatalysator **K** in der ersten Komponente **A** enthalten ist.

8. Verfahren gemäss einem der vorhergehenden Ansprüche, **dadurch gekennzeichnet, dass** das Polyol **A1** ein Polyetherpolyol und/oder ein Polybutadienpolyol umfasst.

9. Verfahren gemäss einem der vorhergehenden Ansprüche, **dadurch gekennzeichnet, dass** das Polyisocyanat **I** eine bei Raumtemperatur flüssige Form von 4,4'-, 2,4'- oder 2,2'-Diphenylmethandiisocyanat und beliebige Gemische dieser Isomeren (MDI) in Form von polymerem MDI oder MDI mit Anteilen von Oligomeren oder Derivaten, insbesondere Carbodiimiden, ist.

10. Verfahren gemäss einem der vorgehenden Ansprüche, **dadurch gekennzeichnet, dass** die zweite Komponente **B** ein Isocyanatgruppen aufweisendes Polyurethanpolymer enthält.

11. Verfahren gemäss einem der vorgehenden Ansprüche, **dadurch gekennzeichnet, dass** das Mischungsverhältnis in Gewichtsteilen zwischen der ersten und der zweiten Komponente im Bereich von 10:1 bis 1:1, insbesondere 7.5:1 bis 2:1, liegt.

12. Verfahren gemäss einem der vorgehenden Ansprüche, **dadurch gekennzeichnet, dass** vor dem Aushärten der gemischten Polyurethanzusammensetzung ein weiterer Gegenstand in die noch nicht gehärtete Zusammensetzung teilweise oder ganz eingetaucht wird oder mit der noch nicht gehärteten Zusammensetzung oberflächlich in Kontakt gebracht wird, so dass der weitere Gegenstand nach Aushärten der Zusammensetzung mit der gehärteten Zusammensetzung zumindest teilweise stoffschlüssig verbunden ist.

13. Verfahren gemäss einem der vorgehenden Ansprüche, **dadurch gekennzeichnet, dass** die Oberfläche des Hohlraums, der Fuge oder des Spalts aus einem Material besteht, das keine Adhäsion zur aushärtenden oder ausgehärteten Polyurethanzusammensetzung aufbaut.

## Claims

1. Method of filling cavities, joins and gaps in a substrate, comprising the steps of:
a) mixing the first component **A** and the second component **B** of a two-component polyurethane composition consisting of a first component **A** and a second component **B;** wherein
- the first component **A** comprises
- at least one polyol **A1** having an OH functionality in the range from 1.5 to 4 and a mean molecular weight (number average) Mₙ, measured by means of GPC against polystyrene, in the range from 250 to 15 000 g/mol, and
- at least one diol **A2** having two hydroxyl groups joined via a C2 to C9 carbon chain, and
- at least one compound **T** having at least one thiol group; and
- the second component **B** comprises
- at least one polyisocyanate **I;**
wherein one of the components additionally comprises at least one metal catalyst **K** for the reaction of hydroxyl groups and isocyanate groups that is able to form thio complexes;
and wherein the molar ratio of all the thiol groups in the at least one compound **T** to all metal atoms in the at least one metal catalyst **K** is between 1:1 and 250:1;
and wherein the molar ratio of all NCO groups in the polyisocyanates **I** to all OH groups in the polyols **A1** and **A2** = 0.9:1 - 1.2:1, especially 1.0:1 - 1.1:1;
and wherein the polyurethane composition, directly after mixing of components **A** and **B** at 23°C, is free-flowing, preferably self-levelling, and has a viscosity, measured at 20°C on a plate-plate viscometer with plate separation 1 mm and plate diameter 25 mm, of < 5000 Pa·s at a shear rate of 0.01 s⁻¹, and of < 500 Pa·s at a shear rate of 1 s⁻¹, and of < 50 Pa·s at a shear rate of 10 s⁻¹;
b) pouring the mixed polyurethane composition into the cavity, join or gap to be filled in the substrate,
c) curing the polyurethane composition in the cavity, join or gap.

2. Method according to Claim 1, **characterized in that** the metal catalyst **K** comprises a bismuth(III) compound, preferably a bismuth(III) carboxylate.

3. Method according to either of Claims 1 and 2, **characterized in that** the diol **A2** is selected from the group consisting of butane-1,3-diol, butane-1,4-diol, butane-2,3-diol, 2-methylpropane-1,3-diol, pentane-1,2-diol, pentane-2,4-diol, 2-methylbutane-1,4-diol, 2,2-dimethylpropane-1,3-diol, hexane-1,2-diol, 3-methylpentane-1,5-diol, octane-1,2-diol, octane-3,6-diol, 2-ethylhexane-1,3-diol, 2,2,4-trimethylpentane-1,3-diol, 2-butyl-2-ethylpropane-1,3-diol, 2,7-dimethyloctane-3,6-diol, cyclohexane-1,4-diol, cyclohexane-1,3-dimethanol and cyclohexane-1,4-dimethanol.

4. Method according to any of the preceding claims, **characterized in that** the at least one compound **T** comprises a polythiol compound having 2 to 6 thiol groups, or a mercaptosilane.

5. Method according to Claim 4, **characterized in that** the at least one compound **T** is selected from the group consisting of ethylene glycol di(3-mercaptopropionate), ethylene glycol dimercaptoacetate, dipentaerythritol hexa(3-mercaptopropionate), and 3-mercaptopropyltrimethoxysilane.

6. Method according to any of the preceding claims, **characterized in that** the molar ratio of all the thiol groups in the at least one compound **T** to all metal atoms in the at least one metal catalyst **K** is between 5:1 and 100:1.

7. Method according to any of the preceding claims, **characterized in that** the metal catalyst **K** is present in the first component **A.**

8. Method according to any of the preceding claims, **characterized in that** the polyol **A1** comprises a polyether polyol and/or a polybutadiene polyol.

9. Method according to any of the preceding claims, **characterized in that** the polyisocyanate I is a form of diphenylmethane 4,4'-, 2,4'- or 2,2'-diisocyanate that is liquid at room temperature and any mixtures of these isomers (MDI) in the form of polymeric MDI or MDI containing proportions of oligomers or derivatives, in particular carbodiimides.

10. Method according to any of the preceding claims, **characterized in that** the second component **B** comprises a polyurethane polymer containing isocyanate groups.

11. Method according to any of the preceding claims, **characterized in that** the mixing ratio in parts by weight between the first and second components is in the range from 10:1 to 1:1, especially 7.5:1 to 2:1.

12. Method according to any of the preceding claims, **characterized in that** the curing of the mixed polyurethane composition is preceded by partial or complete immersion of a further article into the as yet uncured composition or surface contact of a further article with the as yet uncured composition, such that the further article is at least partly cohesively bonded to the cured composition after the composition has cured.

13. Method according to any of the preceding claims, **characterized in that** the surface of the cavity, join or gap consists of a material that does not develop any adhesion to the curing or cured polyurethane composition.

## Revendications

1. Procédé pour le comblement d'espaces vides, de joints et d'interstices dans un substrat, comprenant les étapes
a) mélange du premier composant **A** et du second composant **B** d'une composition de polyuréthane bicomposée constituée d'un premier composant **A** et d'un second composant **B** ; dans lequel
- le premier composant **A** comprend
- au moins un polyol **A1** ayant une fonctionnalité OH dans la plage de 1,5 à 4 et une masse moléculaire moyenne (moyenne en nombre) Mₙ, mesurée par GPC avec étalon polystyrène, dans la plage de 250 à 15 000 g/mole, et
- au moins un diol **A2** comportant deux groupes hydroxy qui sont liés par l'intermédiaire d'une chaîne carbonée en C₂ à Cg, et
- au moins un composé **T** qui comporte au moins un groupe thiol ; et
- le second composant **B** comprend
- au moins un polyisocyanate **I** ;
dans lequel au moins un catalyseur métallique **K** pour la réaction de groupes hydroxy et de groupes isocyanate, qui peut former des thio-complexes, est en outre contenu dans l'un des composants ;
et dans lequel le rapport molaire de tous les groupes thiol dudit au moins un composé **T** à tous les atomes métalliques dudit au moins un catalyseur métallique **K** est compris entre 1:1 et 250:1 ;
et dans lequel le rapport molaire de tous les groupes NCO des polyisocyanates **I** à tous les groupes OH des polyols **A1** et **A2** vaut 0,9:1 - 1,2:1, en particulier 1,0:1 - 1,1:1 ;
et dans lequel immédiatement après mélange des composants **A** et **B** la composition de polyuréthane est fluide, de préférence autonivelante, à 23 °C et présente une viscosité, mesurée à 20 °C sur un viscosimètre plan-plan à distance entre plans de 1 mm et diamètre de plans de 25 mm, de < 5 000 Pa.s à une vitesse de cisaillement de 0,01 s⁻¹ et < 500 Pa.s à une vitesse de cisaillement de 1 s⁻¹ et < 50 Pa.s à une vitesse de cisaillement de 10 s⁻¹ ;
b) coulée de la composition de polyuréthane mélangée, dans l'espace vide à combler, le joint à combler ou l'interstice à combler du substrat.
c) durcissement de la composition de polyuréthane dans l'espace vide, dans le joint ou dans l'interstice.

2. Procédé selon la revendication 1, **caractérisé en ce que** le catalyseur métallique **K** comprend un composé de bismuth(III), de préférence un carboxylate de bismuth(III) .

3. Procédé selon l'une des revendications 1 et 2, **caractérisé en ce que** le diol **A2** est choisi dans le groupe constitué par le 1,3-butanediol, le 1,4-butanediol, le 2,3-butanediol, le 2-méthyl-1,3-propanediol, le 1,2-pentanediol, le 2,4-pentanediol, le 2-méthyl-1,4-butanediol, le 2,2-diméthyl-1,3-propane-diol, le 1,2-hexanediol, le 3-méthyl-1,5-pentanediol, le 1,2-octanediol, le 3,6-octanediol, le 2-éthyl-1,3-hexanediol, le 2,2,4-triméthyl-1,3-pentanediol, le 2-butyl-2-éthyl-1,3-propanediol, le 2,7-diméthyl-3,6-octanediol, le 1,4-cyclohexanediol, le 1,3-cyclohexanediméthanol et le 1,4-cyclohexanediméthanol.

4. Procédé selon l'une des revendications précédentes, **caractérisé en ce que** ledit au moins un composé **T** comprend un composé polythiol comportant 2 à 6 groupes thiol ou un mercaptosilane.

5. Procédé selon la revendication 4, **caractérisé en ce que** ledit au moins un composé **T** est choisi dans le groupe constitué par le di(3-mercaptopropionate) d'éthylèneglycol, le dimercaptoacétate d'éthylène-glycol, l'hexa(3-mercaptopropionate de dipenta-érythritol et le 2-mercaptopropyltriméthoxysilane.

6. Procédé selon l'une des revendications précédentes, **caractérisé en ce que** le rapport molaire de tous les groupes thiol dudit au moins un composé **T** à tous les atomes métalliques dudit au moins un catalyseur métallique **K** est compris entre 5:1 et 100:1.

7. Procédé selon l'une des revendications précédentes, **caractérisé en ce que** le catalyseur métallique **K** est contenu dans le premier composant A.

8. Procédé selon l'une des revendications précédentes, **caractérisé en ce que** le polyol **A1** comprend un polyétherpolyol et/ou un polybutadiènepolyol.

9. Procédé selon l'une des revendications précédentes, **caractérisé en ce que** le polyisocyanate I consiste en une forme liquide à la température ambiante de 4,4'-, 2,4'- ou 2,2'-diisocyanate de diphénylméthane et des mélanges quelconques de ces isomères (MDI) sous forme de MDI polymère ou MDI avec des fractions d'oligomères ou de dérivés, en particulier de carbodiimides.

10. Procédé selon l'une des revendications précédentes, **caractérisé en ce que** le second composant **B** contient un polymère polyuréthane comportant des groupes isocyanate.

11. Procédé selon l'une des revendications précédentes, **caractérisé en ce que** le rapport de mélange en parties en poids entre le premier et le second composant se situe dans la plage de 10:1 à 1:1, en particulier de 7,5:1 à 2:1.

12. Procédé selon l'une des revendications précédentes, **caractérisé en ce qu'**avant le durcissement de la composition de polyuréthane mélangée un autre objet est partiellement ou totalement immergé dans la composition non encore durcie ou est mis superficiellement en contact avec la composition non encore durcie, de sorte qu'après durcissement de la composition l'autre objet est au moins partiellement lié par liaison de matière à la composition durcie.

13. Procédé selon l'une des revendications précédentes, **caractérisé en ce que** la surface de l'espace vide, du joint ou de l'interstice consiste en une matière qui ne crée aucune adhérence à la composition de polyuréthane durcie ou à durcir.
